# EUROPÄISCHE PATENTANMELDUNG

(11) **EP 0 921 330 A2**
(43) Veröffentlichungstag der Anmeldung: **09.06.1999**
(21) Anmeldenummer: 98122654.1
(22) Anmeldetag: 28.11.1998
(51) Int. Cl.: F16D 65/097

(54) **Dämpfungselement**

(30) Priorität: 04.12.1997 DE 19753793
(71) Anmelder: Katz, Mathias, 74172 Neckarsulm (DE); Brand, Klaus, 74613 Öhringen (DE)
(72) Erfinder: Katz, Mathias, 74172 Neckarsulm (DE); Brand, Klaus, 74613 Öhringen (DE)
(74) Vertreter: Winter, Martina Dr.

(57) **Zusammenfassung**

Die vorliegende Erfindung betrifft ein Dämpfungselement (6,35) für eine Bremseinheit (10) mit mindestens einem bremskraftübertragenden Element , bspw. Bremszange oder Bremskolben und mindestens einer Bremsbacke (1,30), wobei die Bremsbacke (1,30) ein Trägerelement (3,31) mit einem auf einer ersten Seitenfläche (4,33) des Trägerelements (3,31) befestigten Reibbelag (2,34) aufweist und das Dämpfungselement (6,35) mit einer der Seitenflächen (5,33) des Trägerelements (3,31) der mindestens einen Bremsbacke (1,30) in Wirkverbindung steht. Erfindungsgemäß ist vorgesehen, daß das Dämpfungselement (6,35) ein keilförmig ansteigendes elastisches Formteil (7) mit einer ansteigenden Seite (6B,35B) und einer abfallenden Seite (6A,35A) ist. Die vorliegende Erfindung betrifft ferner eine Bremseinheit mit mindestens einem derartigen Dämpfungselement.

## Beschreibung

Die vorliegende Erfindung betrifft ein Dämpfungselement für eine Bremseinheit mit mindestens einem bremskraftübertragenden Element, bspw. Bremszange oder Bremskolben und mindestens einer Bremsbacke, wobei die Bremsbacke ein Trägerelement mit einem auf einer ersten Seitenfläche des Trägerelements befestigten Reibbelag aufweist und das Dämpfungselement mit einer der Seitenflächen des Trägerelements der mindestens einen Bremsbacke in Wirkverbindung steht. Die Erfindung betrifft ferner eine Bremseinheit mit einem derartigen Dämpfungselement.

Die vorliegende Erfindung betrifft das Gebiet der Geräuschtechnik bei Bremsen. Bei Bremsen, insbesondere Trommelbremsen oder Scheibenbremsen von Kraftfahrzeugen, kommt es immer wieder zu Pfeif- oder Quietschgeräuschen. Dies wird verursacht durch das Phänomen der Reibschwingungen.

Bremsbacken bestehen im allgemeinen aus einem Trägerelement und einem Reibbelag. Bei einer Scheibenbremse ist das Trägerelement eine einseitig lackierte Rückenplatte, wobei auf der anderen Seite der Reibbelag befestigt ist. Bei einer Trommelbremse ist das Trägerelement ein Bremsträger, auf dem der Reibbelag befestigt ist. Man unterscheidet bei einer in einer Bremseinheit montierten Bremsbacke je nach Laufrichtung der Unterlage, bspw. einer Bremsscheibe oder Bremstrommel, eine einlaufende und eine auslaufende Seite. Beim Bremsvorgang wird die Bremskraft über die Reibbeläge auf die sich translatorisch oder rotatorisch bewegende Unterlage (bspw. einer Bremsscheibe oder Bremstrommel) übertragen. An der einlaufenden und der auslaufenden Seite treten dabei unterschiedliche Kräfte auf. Diese Kräfte verspannen die Bremseinheit bzw. die bremskraftübertragenden Elemente zur auslaufenden Seite hin. Die einwirkende Reibungskraft ist durch das Produkt der senkrecht auf die Unterlage wirkenden Bremskraft und der Reibungszahl definiert. Da die Reibungszahl mit zunehmender Geschwindigkeit abnimmt, führt die Differenz zwischen Haft- und Gleitreibungskraft zu einer Entspannung der bremskraftübertragenden Elemente bzw. der Bremseinheit zur einlaufenden Seite hin. Dadurch resultiert eine negative Dämpfung des Gesamtsystems, wodurch selbsterregte Schwingungen erzeugt werden. Bspw. entsteht eine Schaukelschwingung, die eine Resonanzschwingung der Bremseinheit bzw. des Bremssattels anregen kann. Diese Resonanzschwingung ist Quelle der Pfeif- und Quietschgeräusche.

Steigende Komfortansprüche der Kunden und die allgemeine Reduzierung der Geräuschemissionen haben beim Betrieb von Bremsanlagen mittlerweile erheblich an Bedeutung gewonnen. Die beim Bremsen auftretenden Pfeif- und Quietschgeräusche sind daher unerwünscht. Es sind zahlreiche Möglichkeiten bekannt, diese Geräusche zu unterdrücken. Am gebräuchlichsten sind Dämpfungsbleche und Dämpfungsfolien. Dabei handelt es sich um plane, ein- oder mehrschichtige Formteile, die in unterschiedlichen Materialdicken und Materialarten zu diversen Materialkombinationen ausgeführt sein können. Diese Platten oder Folien werden zwischen Bremssattelkolben und Trägerplatte angeordnet. Bspw. können gleichmäßig mit einem Elastomer beschichtete Stahlbleche auf der Rückenplatte befestigt werden. Je nach Anwendung gibt es verschiedene Beschichtungen und Schichtdicken. Eine Variante sind zweiteilige Rückenplatten, die mit Silikon- oder Acrylatkleber verklebt sind. Die Klebeschicht wirkt wie eine Dämpfungsfolie. Ferner sind Stahlbleche bekannt, die vernickelt oder aluminiumbeschichtet sein können und Aussparungen aufweisen. Vornehmlich an Hinterachsscheibenbremsen werden diese Stahlbleche zwischen dem Bremssattelkolben und der Trägerplatte angeordnet. Sie bewirken, daß die Kraftverhältnisse bei Einwirkung des Bremskolbens verändert werden. Außerdem sind abgesetzte Bremssattelkolben bekannt, bei denen eine Fläche lokal zurückgesetzt ist und dieselbe Wirkung haben wie die soeben beschriebenen Stahlbleche.

Nachteilig daran ist, daß die bekannten Maßnahmen relativ aufwendig sind und die Pfeif- und Quietschgeräusche nicht vollständig unterdrücken können. Neben der nach wie vor unbefriedigenden Geräuschdämpfung sind auch die aufwendigen und teuren Materialkombinationen und das damit verbundene höhere Teilegewicht von Nachteil.

Aufgabe der Erfindung ist es daher, ein Dämpfungselement der oben genannten Art bereitzustellen, das einfach und kostengünstig herstellbar und in Bremseinheiten integrierbar ist und Pfeif- und Quietschgeräusche zuverlässig unterdrückt.

Die Lösung besteht darin, daß das Dämpfungselement ein keilförmig ansteigendes elastisches Formteil mit einer ansteigenden Seite und einer abfallenden Seite ist.

Die zugehörige erfindungsgemäße Bremseinheit zeichnet sich dadurch aus, daß sie ein Dämpfungselement in Form eines zur auslaufenden Seite der Bremsbacke keilförmig ansteigenden elastischen Formteils aufweist.

Dabei wird unter 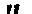 keilförmig ansteigend" verstanden, daß das elastische Formteil zur auslaufenden Seite hin dicker ist als zur einlaufenden Seite hin. Diese Verdickung kann auf beliebige Weise, z. Bsp. kontinuierlich bzw. stetig oder abschnittsweise bzw. stufenförmig ansteigend ausgeführt sein. Mathematisch ausgedrückt, kann die Funktion der Steigung des elastischen Formteils also stetig oder nicht stetig sein.

Das erfindungsgemäße Dämpfungselement bewirkt, daß das bremskraftübertragende Element zuerst die auslaufende Seite komprimiert und erst bei zunehmender Bremskraft auch die einlaufende Seite beeinflußt. Dies bewirkt unterschiedliche Dämpfungs- und/oder Isoliergrade an den jeweiligen Krafteinleitungspunkten. Dadurch wird die Schaukelschwingung gedämpft beziehungsweise isoliert, das heißt, das Übertragungsverhalten auf Bremsenbauteile wird reduziert. Pfeif- und Quietschgeräusche werden im Vergleich zum Stand der Technik zuverlässiger unterdrückt.

Entsprechend der am Bremssystem ermittelten physikalischen Größen wird die individuelle Dämpfung entsprechend den eingesetzten elastischen Materialien und Massenverhältnissen durch eine gezielte Variation der Gesamtdicke im Auflagebereich der Krafteinleitungspunkte erzielt.

Vorteilhafte Weiterbildungen ergeben sich aus den Unteransprüchen. Das Dämpfungselement besteht vorzugsweise aus einem Material mit elastischem und reversiblem Setzverhalten, d.h. es ist unter Druck zumindest in geringem Maß komprimierbar und kehrt in seinen Ausgangszustand zurück, wenn die Belastung aufgehoben wird. Besonders geeignet sind elastomere Kunststoffe, wie z. Bsp. natürliche und synthetische Kautschuke, insbesondere Gummi. Letzteres kann in vorteilhafter Weise auf der Rückenplatte aufvulkanisiert oder aufgespritzt sein. Es sind aber alle Materialien geeignet, die ein elastisches Verhalten zeigen. Beispiele sind Schaumstoffe, Silikone, sonstige ggf. faserverstärkte Kunststoffe wie Acrylate oder Polysulfide oder Kunstharze. Geeignet sind insbesondere auch Dichtungsmaterialien. Metalle sind ebenfalls geeignet, soweit sie elastisches Verhalten zeigen.

Eine weitere vorteilhafte Weiterbildung sieht vor, daß das Dämpfungselement aus einem Mehrkomponenten-Werkstoff besteht. Es kann z. Bsp. aus Kunststoff oder Gummi bestehen und einen stabilisierenden oder versteifenden Kern oder eine Auflage, z. Bsp. in Form einer Gewebeeinlage oder eines Stahlblechs aufweisen. Der Kern bzw. die Auflage wirkt kraftübertragend, so daß die Druckfestigkeit des Dämpfungselements erhöht wird.

Das erfindungsgemäße Dämpfungselement ist auf der auslaufenden Seite vorzugsweise etwa 0,3 - 1 mm dick. Die Gesamtdickendifferenz variiert dabei in der Größenordnung von bis zu 0,7 mm. Die Ausgestaltung des erfindungsgemäßen Dämpfungselements hängt in jedem Einzelfall vom verwendeten Material bzw. der verwendeten Materialkombination und dem mit den Dämpfungselementen auszurüstenden Bremssystem ab. Aus den physikalischen Größen des Bremssystems und den Materialeigenschaften bzw. Massenverhältnissen wird eine optimierte Ausgestaltung des Dämpfungselement (hinsichtlich Gesamtdicke, Keilwinkel, etc.) ermittelt.

Das erfindungsgemäße Dämpfungselement kann ein einstückiges Formteil sein oder aus mehreren Teilen zusammengesetzt sein. Bei einer ersten mehrteiligen Ausführungsform kann das Dämpfungselement aus mehreren Schichten bestehen, also in der Waagrechten geteilt sein. Bspw. können zwei oder mehrere scheibenförmige Teile unterschiedlicher Länge als einzelne Lagen übereinandergestapelt sein, so daß eine ansteigende und eine abfallende Seite resultieren. Die scheibenförmigen Teile können so geformt sein, daß sich eine kontinuierlich oder stetig ansteigende Seite ergibt. Sie können aber auch so ausgebildet sein, daß sich eine stufenförmige, also nicht stetig ansteigende Seite ergibt. Bei einer anderen Ausführungsform kann das erfindungsgemäße Dämpfungselement aus zwei oder mehreren Blöcken unterschiedlicher Höhe zusammengesetzt, also längs geteilt sein. Die Blöcke können wiederum so ausgeführt sein, daß sich eine kontinuierlich bzw. stetig oder eine stufenförmig bzw. nicht stetig ansteigende Seite ergibt.

Das Dämpfungselement ist vorzugsweise kraftschlüssig mit der Rückenplatte verbunden. Es kann aufvulkanisiert, aufgeklebt, mit Stiften oder dergleichen fixiert sein. Es kann selbstverständlich auch durch Formschluß fixiert sein. Es kann auch bei der Herstellung der Bremsbacke einstückig mit dieser verbunden sein. Das Dämpfungselement kann auch in der Rückenplatte integriert sein, z. Bsp. in Form eines elastischen Formteils mit einem verstärkenden Element oder Kern, z. Bsp. aus Stahlblech.

Allgemein können die für die individuelle Auslegung eines erfindungsgemäßen Dämpfungselements wichtigen Masseverhältnisse durch die Wahl der Anbindungspunkte bzw. Reibverhältnisse zwischen Dämpfungselement und weiteren Bauteilen der Bremseinheit beeinflußt werden. Geeignete Maßnahmen sind bspw. Beschichtungen mit gleitaktivem Material, z. Bsp. PTFE oder variierende Oberflächenstrukturen.

Eine besonders vorteilhafte Weiterbildung sieht vor, daß das Dämpfungselement am bremskraftübertragenden Element fixiert ist. Auf diese Weise wird die Verspannung des Bremssattels besonders positiv beeinflußt.

Im folgenden wird ein Ausführungsbeispiel der vorliegenden Erfindung anhand der beigefügten Zeichnungen näher beschrieben. Es zeigen:
- Figur 1: Eine schematische perspektivische, nicht maßstabsgetreue Darstellung einer Bremsbacke für eine Scheibenbremse mit einem Reibbelag, einer Rückenplatte und einer ersten Ausführungsform eines erfindungsgemäßen Dämpfungselements;
- Figur 2: eine schematische Darstellung einer erfindungsgemäßen Bremseinheit in der Draufsicht;
- Figur 3: eine schematische Darstellung eines Querschnitts durch eine weitere Ausführungsform eines erfindungsgemäßen Dämpfungselements;
- Figur 4: eine schematische perspektivische, nicht maßstabsgetreue Darstellung einer Bremsbacke für eine Trommelbremse mit einem Reibbelag, einem Bremsträger und einer dritten Ausführungsform eines erfindungsgemäßen Dämpfungselements.

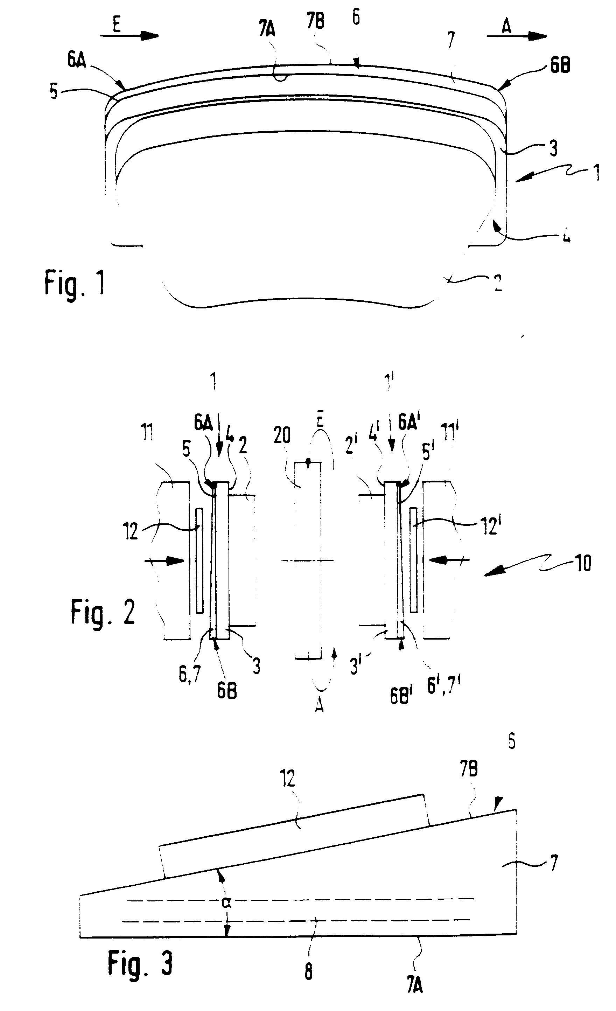

Figur 1 zeigt schematisch eine Bremsbacke 1 für eine Scheibenbremse mit einem Reibbelag 2 und einer Rückenplatte 3. Der Reibbelag 2 ist ein bekannter anorganischer oder organischer Reibbelag. Die Rückenplatte 3 weist eine vordere Seitenfläche 4 und eine hintere Seitenfläche 5 auf. Der Reibbelag 2 ist auf die vordere Seitenfläche 4 der Rückenplatte 3 befestigt, bspw. aufgeklebt. Auf die hintere Seitenfläche 5 der Rückenplatte 3 ist ein Dämpfungselement 6 in Form eines elastischen Formkörpers 7 mit einer geraden Seitenfläche 7A und einer keilförmig ansteigenden Seitenfläche 7B befestigt, z. Bsp. aus Gummi aufvulkanisiert. Das Dämpfungselement 6 ist keilförmig ansteigend. An seinem einen Ende 6A ist es etwa 0,3 mm dick; an seinem anderen Ende 6B ist es etwa 0,6 mm dick. Die Gesamtdickendifferenz bzw. der Keilwinkel α (vgl. Figur 3) variieren aber individuell, abhängig vom Material des Dämpfungselements 6, von den Massenverhältnissen und von den physikalischen Größen der Bremseinheit, in welche das Dämpfungselement eingebaut werden soll. Die Seitenfläche 7B kann mit einem gleitaktiven Material beschichtet sein oder eine strukturierte Oberfläche aufweisen, wodurch die Massenverhältnisse in der Bremseinheit beeinflußt werden.

Das Dämpfungselement 6 ist so auf der hinteren Seitenfläche 5 der Rückenplatte 3 montiert, daß das dünnere Ende 6A auf der durch den Pfeil E symbolisierten einlaufenden Seite und das dickere Ende 6B auf der durch den Pfeil A auslaufenden Seite der in die Bremseinheit montierten Bremsbacke 1 angeordnet ist.

Diese Anordnung wird in Figur 2 nochmals deutlich. Die dort ausschnittweise gezeigte Bremseinheit 10 für eine Scheibenbremse ist durch die schematische Darstellung zweier bremskraftübertragender Elemente 11, 11', bspw. Bremskolben oder Bremszange, angedeutet. Zwei erfindungsgemäße Bremsbacken 1, 1' sind einander gegenüberliegend angeordnet, so daß die bremskraftübertragenden Elemente 11, 11' auf die Rückenplatten 3, 3' der Bremsbacken 1, 1' einwirken können. In der Mitte zwischen den beiden Bremsbacken 1, 1' befindet sich eine Bremsscheibe 20. Die Drehrichtung der Bremsscheibe 20 ist durch die Pfeile E und A angedeutet. Der Pfeil E bezeichnet dabei die einlaufende Seite, der Pfeil A die auslaufende Seite. Die Bremsbacken 1, 1' sind so montiert, daß die keilförmig ansteigenden Enden 6B, 6B' der auf den Rückenplatten 3, 3' befestigten Dämpfungselemente 6, 6' zum auslaufenden Ende A hin orientiert sind. Zwischen den Dämpfungselementen 6, 6' und den bremskraftübertragenden Elementen 11, 11' sind zwei Auflagen 12, 12' angedeutet, die der Erhöhung der Druckfestigkeit der Dämpfungselemente 6, 6' dienen (vgl. unten Fig. 3).

Wenn nun beim Bremsvorgang die bremskraftübertragenden Elemente 11, 11' sich den jeweiligen auf den Rückenplatten 3, 3' der Bremsbacken 1, 1' montierten Dämpfungselementen 6, 6' nähern, werden erst die keilförmig ansteigenden Enden 6B, 6B' der Dämpfungselemente 6, 6' kontaktiert und in der Folge komprimiert. Erst mit zunehmender Bremskraft werden auch die dünneren Enden 6A, 6A' an der einlaufenden Seite komprimiert. Die resultierende Krafteinwirkung ist derart, daß im Übergang von der Haftreibung zur Gleitreibung eine geringere Schaukelschwingung der Bremsenbauteile, z. Bsp. des Bremssattels aufgebaut wird als bisher üblich. Dadurch werden Pfeif- und Quietschgeräusche verringert.

Figur 3 zeigt einen schematischen Querschnitt durch ein weiteres Ausführungsbeispiel eines Dämpfungselements 6. Das Dämpfungselement 6 besteht aus einem Formkörper 7 aus einem elastischen Material mit einer geraden Seitenfläche 7A und einer keilförmig ansteigenden Seitenfläche 7B. In den Formkörper 7 ist ein druckübertragender, stabilisierender und/oder versteifender Kern 8 eingelassen, der die Druckfestigkeit des Dämpfungselements 6 erhöht. Dieser Kern 8 kann z. Bsp. eine Gewebelage oder ein Stahlblech oder ein Faserkern oder ein anderes geeignetes versteifendes bzw. stabilisierendes Element sein. Die Seitenfläche 7B kann mit einem gleitaktiven Material beschichtet sein oder eine strukturierte Oberfläche aufweisen, wodurch die Massenverhältnisse in der Bremseinheit beeinflußt werden.

In Figur 3 ist zusätzlich noch eine Auflage 12 dargestellt, die auf der Seitenfläche 7B des Formkörpers 7 befestigt ist. Die Auflage 12 kann als Alternative zum Kern 8 zur Erhöhung der Druckfestigkeit des Formkörpers 7 dienen.

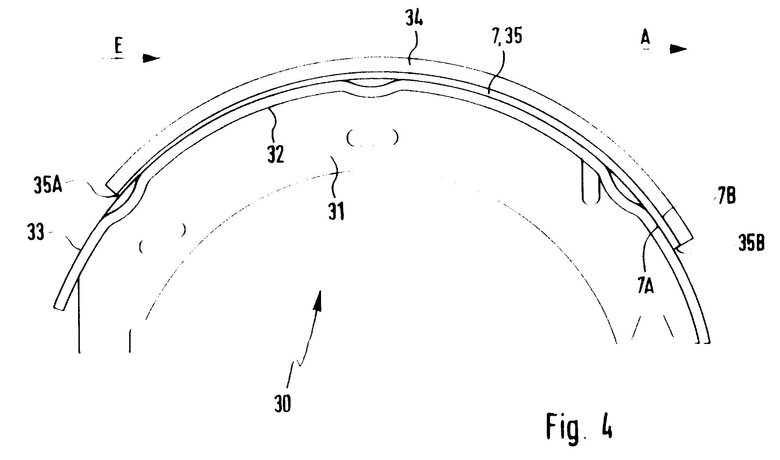

Figur 4 zeigt schematisch eine Bremsbacke 30 für eine Trommelbremse mit einem Reibbelag 34 und einem Bremsträger 31. Der Bremsträger 31 weist eine von einem Querträger getragene freie Seitenfläche 33 mit einem Reibbelag 34 auf. Der Querträger 32 ist der durch den Pfeil B angedeuteten Bremskrafteinwirkung zugewandt. Zwischen dem Reibbelag 34 und der freien Seitenfläche 33 ist ein erfindungsgemäßes Dämpfungselement 35 in Form eines keilförmig ansteigenden Formteils 7 auf der freien Seitenfläche 33 befestigt. Das Formteil weist eine gerade Seitenfläche 7A und eine keilförmig ansteigende Seitenfläche 7B auf. Daraus resultieren eine abfallende Seite 35A und eine ansteigende Seite 35B des erfindungsgemäßen Dämpfungselements 35. Es kann z. Bsp. aus Gummi aufvulkanisiert sein. Das Dämpfungselement 35 ist an seinem einen Ende 35A etwa 0,5 mm dick; an seinem anderen Ende 6B ist es etwa 0,9 mm dick. Die Gesamtdickendifferenz variiert aber auch hier individuell, abhängig vom Material des Dämpfungselements 35, von den Massenverhältnissen und von den physikalischen Größen der Bremseinheit, in welche das Dämpfungselement eingebaut werden soll.

Das erfindungsgemäße Dämpfungselement 6, 35 kann auch aus einem mehrschichtigen oder mehrlagigen Formkörper bestehen. Die einzelnen Schichten können aus verschiedenen Materialien aufgebaut sein. Das Dämpfungselement 6, 35 kann auch zwischen zwei Teile eines mehrteiligen Trägerelements 3, 31 eingebaut sein (hier nicht dargestellt). Bei einem mehrlagigen, z.B. aus zwei oder mehr Metall- und/oder Kunststoffplatten bestehenden Trägerelement 3, 31 kann das Dämpfungselement 6, 35 bspw. zwischen zwei Lagen eingeschoben sein.

Das erfindungsgemäße Dämpfungselement kann statt auf einem Trägerelement auch auf den bremskraftübertragenden Elementen einer Bremseinheit, z. Bsp. auf einer Bremszange montiert sein (hier nicht dargestellt). Dabei sind ebenfalls die keilförmig ansteigenden Enden zur auslaufenden Seite der Bremseinheit hin orientiert.

Wichtig ist also, daß mindestens ein erfindungsgemäßes Dämpfungselement vorhanden ist, das zwischen den bremskraftübertragenden Elementen (z. Bsp. Bremskolben oder Bremszange) und dem Reibbelag derart angeordnet ist, daß sein keilförmig ansteigendes Ende zu der durch die Laufrichtung der Bremsscheibe, Bremstrommel u. dgl. definierten auslaufenden Seite der Bremseinheit hin orientiert ist.

## Patentansprüche

1. Dämpfungselement (6,35) für eine Bremseinheit (10) mit mindestens einem bremskraftübertragenden Element , bspw. Bremszange oder Bremskolben und mindestens einer Bremsbacke (1,30), wobei die Bremsbacke (1,30) ein Trägerelement (3,31) mit einem auf einer ersten Seitenfläche (4,33) des Trägerelements (3,31) befestigten Reibbelag (2,34) aufweist und das Dämpfungselement (6,35) mit einer der Seitenflächen (5,33) des Trägerelements (3,31) der mindestens einen Bremsbacke (1,30) in Wirkverbindung steht, dadurch gekennzeichnet, daß das Dämpfungselement (6,35) ein keilförmig ansteigendes elastisches Formteil (7) mit einer ansteigenden Seite (6B,35B) und einer abfallenden Seite (6A,35A) ist.

2. Dämpfungselement nach Anspruch 1, dadurch gekennzeichnet, daß es auf der ersten Seitenfläche (33) des Trägerelements (31) zwischen der ersten Seitenfläche (33) und dem Reibbelag (34) befestigt ist.

3. Dämpfungselement nach Anspruch 2, dadurch gekennzeichnet, daß es auf einer zweiten Seitenfläche (5) des Trägerelements (3) befestigt ist.

4. Dämpfungselement nach einem der vorhergehenden Ansprüche, dadurch gekennzeichnet, daß es aus einem Material mit elastischem und reversiblem Setzverhalten besteht.

5. Dämpfungselement nach Anspruch 4, dadurch gekennzeichnet, daß es aus einem oder mehreren Materiallagen besteht, insbesondere Metallen und/oder elastischen oder elastomeren Kunststoffen, vorzugsweise natürlichen oder synthetischen Kautschuken, Schaumstoffen, Silikonen, faserverstärkten Kunststoffen, Acrylaten, Polysulfiden und/ oder Kunstharzen.

6. Dämpfungselement nach einem der vorhergehenden Ansprüche, dadurch gekennzeichnet, daß es mindestens eine weitere integrierte oder zusätzliche Komponente (8) aufweist.

7. Dämpfungselement nach Anspruch 6, dadurch gekennzeichnet, daß die weitere integrierte oder zusätzliche Komponente ein stabilisierender oder versteifender Kern (8) oder eine Auflage (12), insbesondere aus einer oder mehreren Gewebelagen oder aus Metall ist.

8. Dämpfungselement nach einem der vorhergehenden Ansprüche, dadurch gekennzeichnet, daß es ein- oder mehrstückig ist.

9. Dämpfungselement nach Anspruch 7 und 8, dadurch gekennzeichnet, daß es in ein mehrteiliges Trägerelement (3,31) integriert ist.

10. Dämpfungselement nach einem der vorhergehenden Ansprüche, dadurch gekennzeichnet, daß es auf der ansteigenden Seite (6B,35B) etwa 0,3 bis 1 mm dick ist und/oder die Gesamtdickendifferenz zwischen den Seiten (6A,35A, 6B,35B) bis zu etwa 0,7 mm beträgt.

11. Dämpfungselement nach einem der vorhergehenden Ansprüche, dadurch gekennzeichnet, daß die dem bremskraftübertragenden Element zingewandte Seitenfläche (7B) des Formkörpers (7) beschichtet und/oder an ihrer Oberfläche strukturiert ist bzw. kraftschlüssige Anbindungspunkte zum bremskraftübertragenden Element aufweist.

12. Bremseinheit (10) mit mindestens einem bremskraftübertragenden Element, bspw. Bremskolben oder Bremszange und mindestens einer Bremsbacke (1,30), wobei die Bremsbacke (1) ein Trägerelement (3,31) mit einem auf einer Seitenfläche (4,33) des Trägerelements (3,31) befestigten Reibbelag (2,34) aufweist und ein Dämpfungselement (6,35) mit einer der Seitenflächen (5,33) des Trägerelements (3,31) der mindestens einen Bremsbacke (1) in Wirkverbindung steht, wobei jede Bremsbacke (1) eine durch die Laufrichtung der Bremsscheibe (20), Bremstrommel u. dgl. definierte ein laufende Seite (E) und eine auslaufende Seite (A) aufweist, dadurch gekennzeichnet, daß das Dämpfungselement (6,35) ein zur auslaufenden Seite (A) der Bremsbacke (1) keilförmig ansteigendes elastisches Formteil (7) ist.

13. Bremseinheit nach Anspruch 12, dadurch gekennzeichnet, daß das Dämpfungselement (6,35) aus einem Material mit einem elastischen und reversiblen Setzverhalten besteht.

14. Bremseinheit nach Anspruch 13, dadurch gekennzeichnet, daß das Dämpfungselement (6,35) aus einem oder mehreren Materiallagen besteht, insbesondere Metallen und/oder elastischen oder elastomeren Kunststoffen, vorzugsweise natürlichen oder synthetischen Kautschuken, Schaumstoffen, Silikonen, faserverstärkten Kunststoffen, Acrylaten, Polysulfiden und/ oder Kunstharzen.

15. Bremseinheit nach einem der Ansprüche 12 bis 14, dadurch gekennzeichnet, daß das Dämpfungselement (6,35) mindestens eine weitere integrierte oder zusätzliche Komponente (8) aufweist.

16. Bremseinheit nach Anspruch 15, dadurch gekennzeichnet, daß die weitere integrierte oder zusätzliche Komponente des Dämpfungselements (6,35) ein stabilisierender oder versteifender Kern (8) oder eine Auflage (12), insbesondere aus einer oder mehreren Gewebelagen oder aus Metall ist.

17. Bremseinheit nach einem der Ansprüche 12 bis 16, dadurch gekennzeichnet, daß das Dämpfungselement (6,35) zur auslaufenden Seite (A) hin etwa 0,3 bis 1 mm dick ist und/oder die Gesamtdickendifferenz zwischen der auslaufenden Seite (A) und der einlaufenden Seite (8) bis zu etwa 0,7 mm beträgt.

18. Bremseinheit nach einem der Ansprüche 12 bis 17, dadurch gekennzeichnet, daß die dem bremskraftübertragenden Element zugewandte Seitenfläche (7B) des das Dämpfungselement bildenden Formkörpers (7) beschichtet und/oder an ihrer Oberfläche strukturiert ist bzw. kraftschlüssige Anbindungspunkte zum bremskraftübertragenden Element aufweist.

19. Bremseinheit nach einem der Ansprüche 12 bis 18, dadurch gekennzeichnet, daß das Dämpfungselement (6,35) ein- oder mehrstückig mit dem Trägerelement (3,35) verbunden ist.

20. Bremseinheit nach Anspruch 19, dadurch gekennzeichnet, daß das Dämpfungselement (6,35) auf das Trägerelement (3,31) aufgeklebt, aufgespritzt oder aufvulkanisiert ist.

21. Bremseinheit nach Anspruch 19, dadurch gekennzeichnet, daß das Dämpfungselement (6,35) mit Stiften o. dgl. auf dem Trägerelement (3,31) fixiert ist.

22. Bremseinheit nach einem der Ansprüche 12 bis 21, dadurch gekennzeichnet, daß das Trägerelement eine Rückenplatte (3) für die Bremsbacke (1) einer Scheibenbremse ist.

23. Bremseinheit nach einem der Ansprüche 12 bis 21, dadurch gekennzeichnet, daß das Trägerelement ein Bremsträger (31) für die Bremsbacke (30) einer Trommelbremse ist.
